# EUROPÄISCHE PATENTANMELDUNG

(11) **EP 0 831 628 A2**
(43) Veröffentlichungstag der Anmeldung: **25.03.1998**
(21) Anmeldenummer: 97116182.3
(22) Anmeldetag: 17.09.1997
(51) Int. Cl.: H04M 1/00, H04M 1/272

(54) **Verfahren für Fernsprechendgeräte, insbesondere Mobilfunkendgeräte, zur Behandlung von Eingabeinformationen**

(30) Priorität: 23.09.1996 DE 19639018
(71) Anmelder: SIEMENS AKTIENGESELLSCHAFT, 80333 München (DE)
(72) Erfinder: Slonina, Bernhard, Dipl.-Inform., 46397 Bocholt (DE); Bartsch, Ulrich, Dipl-.Ing., 46244 Bottrop (DE); Lonnen, Hans-Jürgen, Dipl.-Ing., 46419 Isselburg (DE)

(57) **Zusammenfassung**

Bei einem Kommunikationsendgerät ist ein Aufzeichnungsmodus aktivierbar, in dem alle nachfolgend an der Tastatur bewirkten Eingabeinformationen in Form von Tastencodes in einen Tastatureingabespeicher gespeichert werden. Bei Deaktivierung des Aufzeichnungsmodus werden die gespeicherten Tastencodes in einen auswählbaren Tastensequenzbereich eines Aufzeichnungspeichers übertragen. Bei Aktivierung eines Aufrufmodus werden die in einem Tastensequenzbereich befindlichen Tastencodes einer Auswerteeinrichtung zugeführt.

## Beschreibung

Die Erfindung betrifft ein Verfahren für Fernsprechendgeräte, insbesondere Mobilfunkendgeräte, zur Behandlung von durch Tastenbetätigung an einer Tastatur bewirkten Eingabeinformationen gemäß dem Oberbegriff des Patentanspruchs 1.

Eine Vielzahl von bekannten Fernsprechendgeräten weisen einen Funktionsumfang auf, der weit über die Grundfunktionen eines einfachen Telefons hinausreicht. Mit diesem Funktionsumfang und unterstützt durch spezielle Anzeige- und Bedienelemente, z.B. einem LC-Display und Funktionstasten zur Aktivierung von Leistungsmerkmalen, soll einem Benutzer des Fernsprechendgerätes ein hoher Bedienkomfort vermittelt werden.

Eine den Bedienkomfort wesentlich erhöhende Endgerätefunktion besteht u.a. darin, eine beliebige Rufnummer zugeordnet zu einer Kurzwahltaste oder zu einem vom Benutzer definierten und durch Tastenbetätigung eingegebenen Kennwort - i.a. einem Namen - abzuspeichern. Durch Betätigung der betreffenden Kurzwahltaste bzw. durch Eingabe des betreffenden Kennwortes kann die gespeicherte Rufnummer wieder als Sequenz abgerufen werden. Bei dieser bekannten Endgerätefunktion können jeweils nur Rufnummern abgespeichert werden.

Aufgabe der vorliegenden Erfindung ist es, in einem Fernsprechendgerät Maßnahmen vorzusehen, mit denen der Komfort im Hinblick auf eine Reduzierung des Aufwandes für Bedienereingaben erhöht wird.

Gelöst wird die Aufgabe ausgehend von den Merkmalen des Oberbegriffs des Patentanspruchs 1 durch die kennzeichnenden Merkmale des Patentanspruchs 1.

Ein wesentlicher Vorteil der Erfindung ist darin zu sehen, daß aufgrund des Speicherns von tastenindividuellen Tastencodes kein Unterscheidung zwischen Zifferntasten und Funktionstasten gemacht wird, und eine Betätigungssequenz von beliebigen Tasten - also nicht nur von Zifferntasten - speicher- und wieder abrufbar ist.

Vorteilhafte Weiterbildungen der Erfindung sind in den Unteransprüchen angegeben.

Mit Hilfe einer durch Betätigen einer Unterbrechungstaste realisierbaren Abspeicherung einer Unterbrechungssteuerinformation läßt sich der Abruf der gespeicherten Eingabeinformationen interaktiv gestalten, d.h. die Sequenz der gespeicherten Eingabeinformationen wird bei ihrer Wiedergabe gezielt unterbrochen, um z.B. eine manuelle Eingabe zu ermöglichen.

Ein Ausführungsbeispiel der Erfindung wird im folgenden anhand der Zeichnungen näher erläutert.

Dabei zeigen
- FIG 1a: ein Ablaufdiagramm zur Veranschaulichung von im Aufzeichnungsmodus ausgeführten Verfahrensschritten.
- FIG 1b: eine Fortsetzung des Ablaufdiagramms gemäß FIG 1a mit im Aufzeichnungsmodus ausgeführten Verfahrensschritten.
- FIG 2: ein Ablaufdiagramm zur Veranschaulichung von im Aufrufmodus ausgeführten Verfahrensschritten.

Das Ausführungsbeispiel basiert auf einem herkömmlichen Fernsprechendgerät, insbesondere einem Mobilfunkendgerät bzw. Schnurlos-Telefon, das neben einer Tastatur eine Anzeigeeinrichtung, z.B. in Form einer mehrzeiligen alphanumerischen LCD-Anzeige aufweist. In dem Fernsprechendgerät ist zur Steuerung von Endgerätefunktionen, insbesondere zur Abfrage der Tastatur und zur Ansteuerung der Anzeigeeinrichtung, ein entsprechend programmierter Mikroprozessor vorhanden.

Zur Realisierung der Erfindung bzw. einer Weiterbildungen derselben - wie nachfolgend anhand des Ausführungsbeispiels erläutert - ist in einem derartigen Fernsprechendgerät lediglich eine entsprechende programmtechnische Umsetzung des Verfahrens und eine Einbindung des Programms in die bestehende Programmstruktur des Fernsprechendgerätes erforderlich.

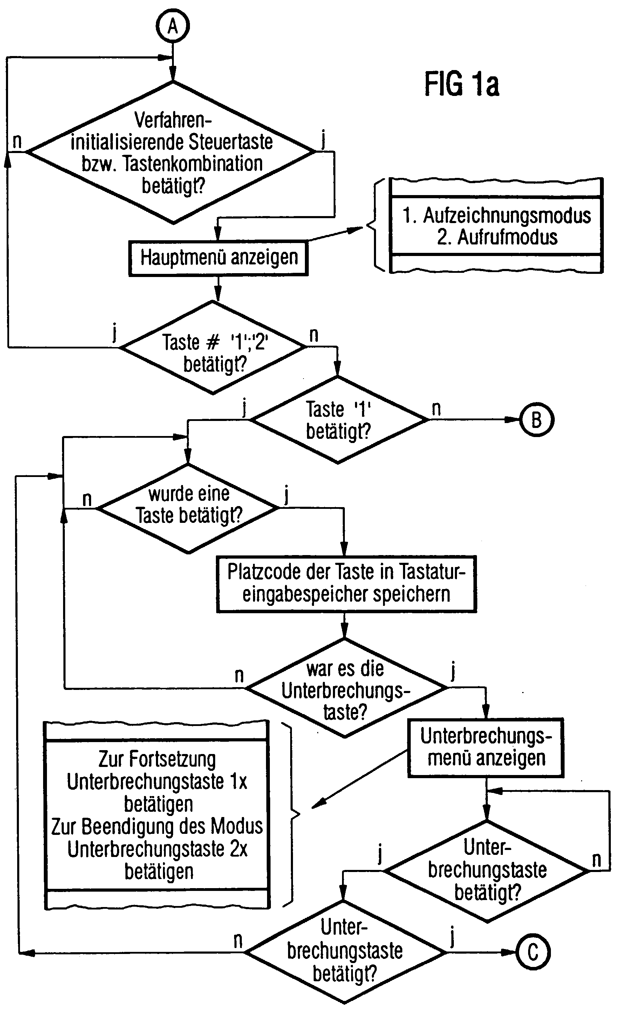

In FIG 1a sind die Verfahrensschritte angegeben, die nach einer Weiterbildung der Erfindung im Zuge einer Aktivierung des Aufzeichnungsmodus durchgeführt werden.

In einem normalen Betriebsmodus, d.h. bei inaktivem Aufzeichnungs- oder Aufrufmodus gemäß vorliegender Erfindung, wird bei jeder durch einen Bediener vorgenommenen Tastenbetätigung diese vom Mikroprozessor als solche erkannt, und daraufhin ein tastenindividueller Tastencode, d.h. eine die betätigte Taste innerhalb der Tastatur identifizierende Information, ermittelt und an eine Auswerteeinrichtung weitergeleitet. Diese Auswerteeinrichtung kann dabei auch durch den Mikroprozessor und einem entsprechenden Programmodul realisiert sein.

Eine Taste der Tastatur oder eine Tastenkombination ist im normalen Betriebsmodus dafür vorgesehen, den Aufzeichnungsmodus bzw. Aufrufmodus gemäß vorliegender Erfindung zu aktivieren.

Nach Betätigung dieser - in der Figur - als Steuertaste bezeichneten Taste, wird auf der Anzeigeeinrichtung ein Hauptmenü angezeigt, das u.a. die Möglichkeit einer Aktivierung eines Aufzeichnungsmodus oder eines Aufrufmodus anbietet. Sowohl der Aufzeichnungs- als auch der Aufrufmodus können im Zuge einer Menüführung die Form von Untermenüs aufweisen, in denen weitere Alternativen oder wiederum Untermenüs auswählbar sind. Im weiteren soll aber zur Vereinfachung des Ausführungsbeispiels auf die Anwendung von Menütechniken nicht näher eingegangen werden.

Auch die Auswahl des gewünschten Modus kann nach unterschiedlichen Verfahrensweisen erfolgen z.B. durch Markierung mit Hilfe von Cursortasten, durch schrittweises Weiterschalten bis zur Anzeige der gewünschten Alternative und anschließender Bestätigung, durch Eingabe eines die gewünschte Alternative identifizierenden Kennwortes, durch Betätigen einer entsprechend gewidmeten Funktionstaste oder allgemein über Menüfunktionen.

Lediglich zur Vereinfachung des zu erläuternden Ausführungsbeispiels wird jedoch im weiteren von einer Auswahl der gewünschten Alternative, d.h. des gewünschten Modus, mittels Zifferntasten ausgegangen.

Um die Auswahl mittels Zifferntasten zu erleichtern, wird im Hauptmenü darauf hingewiesen, daß eine Aktivierung des Aufzeichnungsmodus durch Betätigen der Zifferntaste '1' und eine Aktivierung des Aufrufmodus z.B. durch Betätigen der Zifferntaste erfolgt.

Falls nach der Anzeige des Hauptmenüs vom Bediener als nächstes eine Taste betätigt wird, die sich von der Zifferntaste '1' oder der Zifferntaste '2' unterscheidet, wird der eingeleitete Aufzeichnungs- bzw. Aufrufmodus sofort abgebrochen.

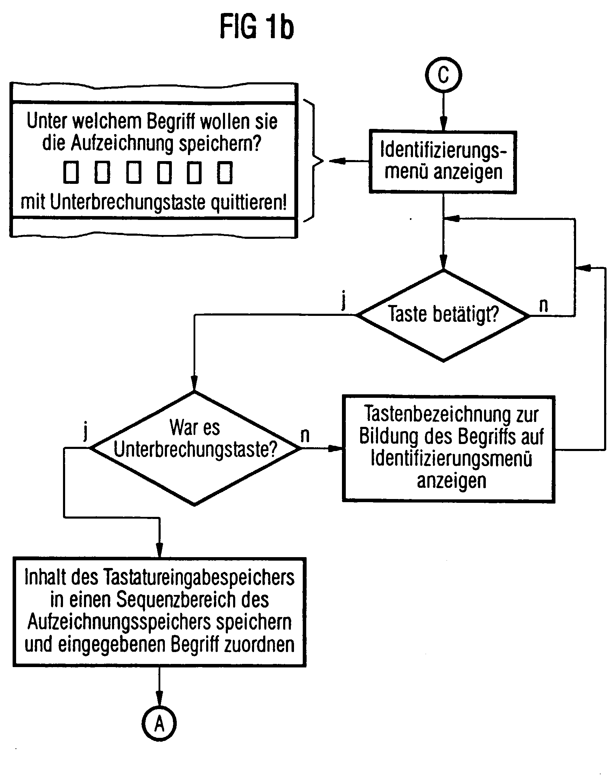

Wird dagegen die Betätigung der Zifferntaste '1' erkannt, ist der Aufzeichnungsmodus aktiviert. Für den Fall, daß die Zifferntaste '2' betätigt wurde, ist der Aufrufmodus aktiviert (durch "B" in FIG 1 und Fig 1a markiert). Ein nochmaliges Aktivieren des Aufzeichnungs- bzw. Aufrufmodus ist nicht sinnvoll, weshalb die das Verfahren (Aufzeichnungs- bzw. Aufrufmodus) initialisierende Steuertaste bzw. die entsprechende Tastenkombination nach Aktivieren des Verfahrens eine andere Bedeutung haben kann.

Bei aktiviertem Aufzeichnungsmodus wird mit Ausnahme einer auf der Tastatur des Fernsprechendgerätes als Unterbrechungstaste vorgesehenen Taste - für die z.B. die zum Ein- und Ausschalten des Fernsprechendgerätes vorgesehene Ein/Austaste dienen kann - bei Betätigung einer jeweiligen Taste deren Tastencode der Auswerteeinrichtung zugeführt. Parallel dazu wird der Tastencode - oder auch Platzcode genannt - aller betätigten Tasten, also auch der Unterbrechungstaste, in der Reihenfolge der Betätigung nacheinander in einen Tastatureingabespeicher eingespeichert.

Dieser Tastatureingabespeicher kann z.B. in Form eines acht Bit breiten und 32 Bit tiefen - d.h. für maximal 32 Tastenbetätigungen Platz bietendes - Schieberegisters oder durch eine softwaremäßige Realisierung desselben ausgebildet sein. Nach Abspeichern des einer jeweiligen betätigten Taste zugehörigen Tastencodes in den Tastatureingabespeicher wird anschließend jeweils überprüft, ob der Tastencode der Unterbrechungstaste eingespeichert wurde.

Die Unterbrechungstaste wird vom Bediener in der Regel dann betätigt, wenn eine nachfolgende Eingabe - also eine oder eine Sequenz von Tastenbetätigung - nicht aufgezeichnet werden soll. Dies ist z.B. dann der Fall, wenn eine Kennummer zur Authentifizierung des Benutzers eingegeben werden soll. Die Aufzeichnung einer Kennummer sollte natürlich vermieden werden, um ihren geheimen Charakter zu bewahren.

Wird nach Abspeichern des Tastencodes einer betätigten Taste erkannt, daß es sich um den Tastencode der Unterbrechungstaste handelt, wird auf der Anzeigeeinrichtung ein Unterbrechungsmenü dargestellt.

Dieses Unterbrechungsmenü bietet die Alternativen an, durch einmaliges Betätigen der Unterbrechungstaste eine Fortsetzung des Aufzeichnungsmodus zu veranlassen oder durch zweimaliges Betätigen der Unterbrechungstaste den Aufzeichnungsmodus zu beenden.

Nach einmaligem Betätigen der Unterbrechungstaste wird weiter, wie bereits erläutert, der Tastencode einer jeden nachfolgend betätigten Taste in den Tastatureingabespeicher eingespeichert. Ein zweimaliges Betätigen der Unterbrechungstaste führt zur Beendigung der Aufzeichnungsmodus (mit "C" in FIG 1a markiert).

In FIG 1b sind die Verfahrensschritte dargestellt, die im Zuge einer Beendigung des Aufzeichnungsmodus als Fortsetzung zu der mit "C" markierten Stelle in FIG 1a aufgeführt werden.

Nachdem der Beendigungswunsch für den Aufzeichnungsmodus durch zweimaliges Betätigen der Unterbrechungstaste erkannt wurde, wird ein Identifizierungsmenü an der Anzeigeeinrichtung dargestellt. Mit diesem Identifizierungsmenü wird der Bediener dazu aufgefordert, einen Begriff zu definieren, unter dem die im Tastatureingabespeicher befindlichen Tastencodes gespeichert und bei Bedarf wieder abgerufen werden können. Der Begriff kann sich z.B. aus einem oder mehreren Ziffern und Buchstabenkombinationen zusammensetzen. Eine Auswahl von Buchstaben kann z.B. durch Umbelegung bzw. Umwidmung der vorhandenen Funktionstasten während der Anzeige des Identifizierungsmenüs ermöglicht werden.

Die während der Anzeige des Identifizierungsmenüs zur Eingabe eines Begriffes vorgenommenen Tastenbetätigungen bzw. deren Tastencodes werden selbstverständlich nicht an die Auswerteeinrichtung weitergeleitet.

Nachdem der Begriff vom Bediener eingegeben und auf der Anzeigeeinrichtung überprüft wurde, kann die Richtigkeit des Begriffes durch Betätigen der Unterbrechungstaste quittiert werden. Nach Betätigen der Unterbrechungstaste wird die in dem Tastatureingabespeicher befindliche Sequenz von Tastencodes in einem Tastensequenzbereich eines Aufzeichnungsspeichers eingespeichert, wobei dem Tastensequenzbereich der eingegebene Begriff zugeordnet wird. Danach wird der Ablauf des Verfahrens beendet und kann wieder von Vorne beginnen (durch "A" in FIG 1b bzw. FIG 1a markiert). Der Aufzeichnungsspeicher ist als nichtflüchtiger Schreib-Lesespeicher ausgeführt, damit die gespeicherten Eingabeinformationen bei Ausfall der Spannungsversorgung, insbesondere bei Batteriewechsel, gespeichert bleiben.

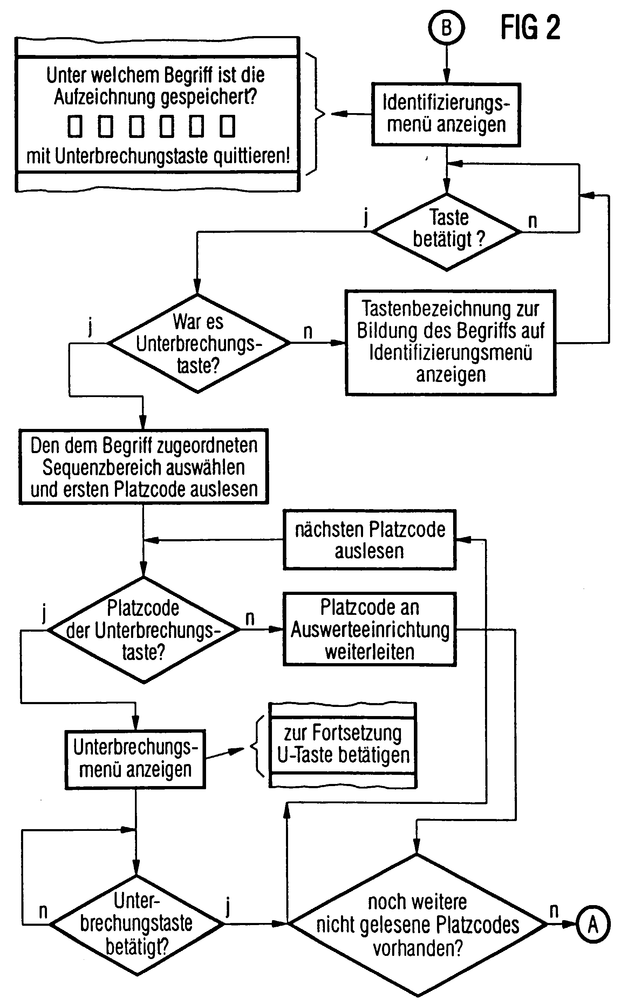

In FIG 2 sind die Verfahrensschritte angegeben, die nach einer Aktivierung des Aufrufmodus (als Fortsetzung zur Markierung "B" in FIG 1a) ausgeführt werden. Nachdem durch Betätigen der Zifferntaste '2' der im Hauptmenü zur Auswahl stehende Aufrufmodus aktiviert wurde, wird ein Identifizierungsmenü angezeigt, mit dem der Bediener aufgefordert wird, den Begriff anzugeben, unter dem die von ihm gewünschte Sequenz von Tastenbetätigungen gespeichert ist. Alternativ hierzu können auch sämtliche gespeicherten Begriffe für eine Auswahl durch den Bediener angezeigt werden. Die Eingabe des Begriffes erfolgt analog zu der in Zusammenhang mit Fig 1b im Aufzeichnungsmodus erläuterten Eingabe.

Ein korrekt eingegebener Begriff wird durch Betätigen der Unterbrechungstaste quittiert. Daraufhin wird der dem Begriff zugeordnete Tastensequenzbereich im Aufzeichnungsspeicher ausgewählt und die darin gespeicherten Tastencodes werden in der Reihenfolge ihrer Einspeicherung nacheinander ausgelesen und an die Auswerteeinrichtung weitergeleitet. Wird beim Auslesen eines Tastencodes erkannt, daß es sich um den Tastencode der Unterbrechungstaste handelt, wird ein Unterbrechungsmenü angezeigt, mit dem der Bediener aufgefordert wird zur Fortsetzung des Aufrufmodus die Unterbrechungstaste zu betätigen.

Sobald also der Tastencode der Unterbrechungstaste erkannt wird, wird das Auslesen der Tastencodes aus dem Tastensequenzbereich unterbrochen. Danach kann z.B. vom Bediener eine Kennummer zur Authentifizierung eingegeben werden, oder es können beliebige andere Funktionen vom Bediener ausgelöst werden, da ein Betätigen der Tasten bzw. deren Tastencodes - wie im normalen Betriebsmodus - an die Auswerteeinrichtung weitergeleitet werden.

Erst bei Betätigung der Unterbrechungstaste wird der Aufrufmodus fortgesetzt, und die weiteren, noch nicht ausgelesenen, im selektierten Tastensequenzbereich gespeicherten Tastencodes werden ausgelesen und der Auswerteeinrichtung zugeführt. Selbstverständlich können mehrfache Unterbrechungen vorgesehen werden, wodurch ein komfortables interaktives Verfahren erzielbar ist.

Sobald sämtliche Tastencodes aus dem selektierten Tastensequenzbereich ausgelesen wurden, wird der Aufrufmodus und damit das gesamte Verfahren beendet (durch "A" in FIG 2 markiert) und kann wieder neu initialisiert werden (durch "A" in FIG 1a markiert).

## Patentansprüche

1. Verfahren für ein Kommunikationsendgerät, insbesondere Mobilfunktelefon, zur Behandlung von durch Tastenbetätigungen an einer Tastatur des Kommunikationsendgerätes bewirkten Eingabeinformation, die einer Auswerteeinrichtung zugeführt werden,
**dadurch gekennzeichnet**,
daß nach einer Aktivierung eines Aufzeichnungsmodus in dem Kommunikationsendgerät, nachfolgend an der Tastatur bewirkte Eingabeinformationen in Form jeweils eines tastenindividuellen Tastencodes in einen Tastatureingabespeicher gespeichert werden,
daß bei einer Deaktivierung des Aufzeichnungsmodus die in dem Tastatureingabespeicher befindlichen tastenindividuellen Tastencodes in einen Tastensequenzbereich eines im Kommunikationsendgerät befindlichen Aufzeichnungspeichers gespeichert werden und
daß bei einer Aktivierung eines Aufrufmodus nach Selektierung eines Tastensequenzbereichs die in diesem befindlichen tastenindividuellen Tastencodes in der Reihenfolge ihrer Einspeicherung ausgelesen und der Auswerteeinrichtung zugeführt werden.

2. Verfahren nach Anspruch 1,
**dadurch gekennzeichnet**,
daß bei einer Unterbrechung des Aufzeichnungsmodus eine Unterbrechungssteuerinformation in den Tastatureingabespeicher eingespeichert wird,
daß eine Einspeicherung von durch nachfolgende Tastenbetätigungen bewirkten tastenindividuellen Tastencodes solange unterbunden wird, bis eine Fortsetzung des Aufzeichnungsmodus erfolgt und
daß bei einer im Aufrufmodus ausgelesenen Unterbrechungssteuerinformation eine weitere Zuführung von im selektierten Tastensequenzbereich gespeicherten tastenindividuellen Tastencodes an die Auswerteeinrichtung unterbunden wird, bis eine Fortsetzung des Aufrufmodus erfolgt.

3. Verfahren nach Anspruch 1 oder 2,
**dadurch gekennzeichnet**,
daß die Aktivierung des Aufzeichnungsmodus und/oder des Aufrufmodus durch Betätigen einer Steuertaste bewirkt wird, der bei aktiviertem Aufzeichnungsmodus bzw. Aufrufmodus eine andere Funktion zugewiesen wird.

4. Verfahren nach Anspruch 2 oder 3,
**dadurch gekennzeichnet**,
daß eine Unterbrechung des Aufzeichnungsmodus durch Betätigen einer Unterbrechungstaste erfolgt.

5. Verfahren nach Anspruch 4,
**dadurch gekennzeichnet**,
daß die Unterbrechungstaste durch die Ein-/Austaste realisiert wird.

6. Verfahren nach einem der Ansprüche 1 bis 5,
wobei das Kommunikationsendgerät eine alphanumerische Anzeigeeinrichtung aufweist, an der Eingabeaufforderung für einen Benutzer visualisierbar sind,
**dadurch gekennzeichnet**,
daß bei einer Betätigung einer Steuertaste eine Menüanzeige mit einer alternativen Abfrage nach Aktivierung des Aufzeichnungsmodus oder Aufrufmodus erfolgt, wobei bei erfolgter Wahl der Aktivierung des Aufrufmodus eine Eingabeaufforderung für den zur Identifizierung des Frequenzbereichs dienenden Identifikatorbezeichnung erfolgt.

7. Verfahren nach Anspruch 6,
**dadurch gekennzeichnet**,
daß bei aktivem Aufzeichnungsmodus und Betätigen der Unterbrechungstaste, an der alphanumerischen Anzeigeeinrichtung eine Menüanzeige mit einer Abfrage nach einer Fortsetzung oder Beendigung des Aufzeichnungsmodus erfolgt, wobei bei gewählter Beendigung des Aufzeichnungsmodus eine Eingabeaufforderung für eine zur Identifizierung des die im Tastatureingabespeicher befindlichen Eingabeinformationen speichernden Tastensequenzbereichs dienenden Identifikatorbezeichnung erfolgt.

8. Verfahren nach Anspruch 6,
**dadurch gekennzeichnet**,
daß bei aktiviertem Aufrufmodus und Erkennung einer Unterbrechungssteuerinformation eine Menüanzeige mit einer Abfrage nach Fortsetzung des Aufrufmodus erfolgt.
